(19) Europäisches Patentamt
European Patent Office
Office européen des brevets

(11) EP 2 955 720 A1

(12) **EUROPEAN PATENT APPLICATION**

(43) Date of publication:
16.12.2015 Bulletin 2015/51

(51) Int Cl.:
*G21C 17/108* (2006.01)     *G21D 3/00* (2006.01)

(21) Application number: 14171984.9

(22) Date of filing: 11.06.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Korea Hydro & Nuclear Power Co., Ltd.**
**Gyeongju-si**
**Gyeongsangbuk-do 780-947 (KR)**

(72) Inventors:
• **Park, Moon Ghu**
**448-509 Gyeonggi-do (KR)**
• **Shin, Ho Cheol**
**305-340 Daejeon (KR)**
• **Park, Jong Eun**
**305-343 Daejeon (KR)**

(74) Representative: **Kransell & Wennborg KB**
**P.O. Box 27834**
**115 93 Stockholm (SE)**

(54) **Method of synthesizing nuclear reactor power distribution using optimized nonlinear basis function**

(57)    Disclosed herein is a method of synthesizing nuclear reactor power distribution using an optimized nonlinear basis function by means of combining signals of neutron detectors provided inside or outside a nuclear reactor. The method includes searching an optimized basis function combination, without determining previously a shape of a basis function, in such a way that error occurrence is minimized, and determining a shape of a synthesis function. When searching the optimized basis function combination and determining the shape of the synthesis function, the following equation is used.

$$FZ(Z_i) = a_0 + \sum_{i=1}^{n} a_i \phi_i + \sum_{i=1}^{n} \sum_{j=1}^{n} a_{ij} \phi_i \phi_j + \sum_{i=1}^{n} \sum_{j=1}^{n} \sum_{k=1}^{n} a_{ijk} \phi_i \phi_j \phi_k + ...$$

(here, $FZ(Z_i)$: a power distribution value at position $Z_i$, $\Phi_i$, $\Phi_j$, $\Phi_k$: signals of detectors at respective positions).

FIG. 1

**Description**

BACKGROUND OF THE INVENTION

1. Field of the Invention

The present invention relates to methods of synthesizing nuclear reactor power distribution, and more specifically, to a method of synthesizing nuclear reactor power distribution using an optimized nonlinear basis function.

2. Description of the Related Art

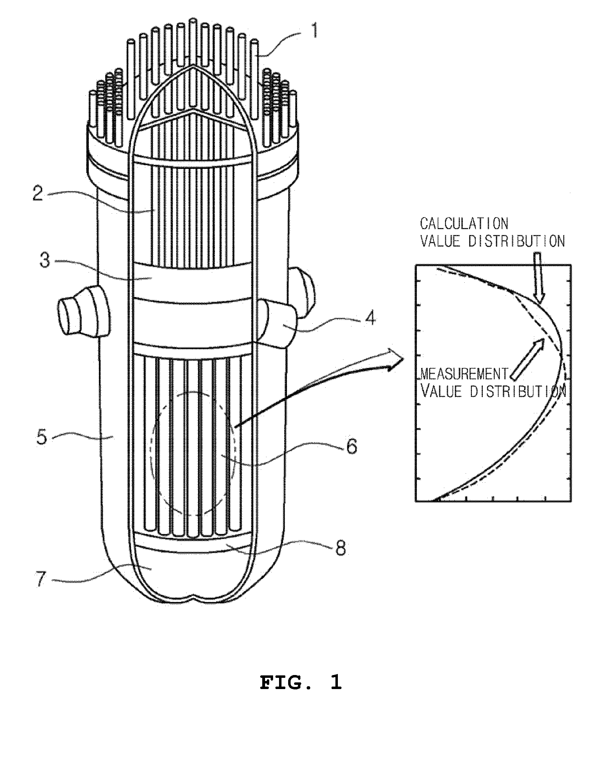

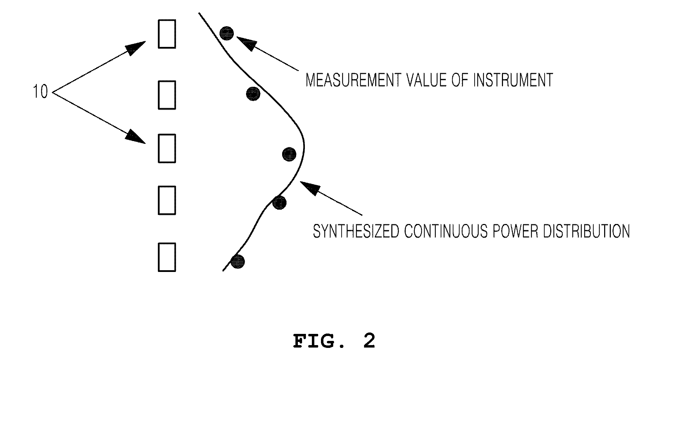

Power distribution in nuclear reactors is one of the most important factors in ensuring the safety of nuclear power plants and is used in important facilities related to plant safety, e.g., reactor core monitoring system equipment, nuclear reactor protective system, etc. FIG. 1 shows the construction of a reactor core and an example of calculation of axial power distribution. As shown in FIG. 1, there is a difference in power distributions between calculation values (reference values calculated with design codes) and actually measured values. As this difference increases, uncertainty of design calculation is increased, whereby operation margin of a nuclear reactor is reduced. Therefore, it is very important to reduce a difference between the calculation value and the measurement value to increase the operation margin, not only for the safety of the nuclear power plant, but also for economical feasibility by reducing unexpected shutdown of the plant, power up-rating resulting, etc.
In FIG. 1, reference numeral 1 denotes a control rod drive mechanism, numeral 2 denotes an upper control-rod guide structure, numeral 3 denotes a coolant inlet nozzle of a core barrier, numeral 4 denotes a coolant outlet nozzle, numeral 5 denotes a reactor vessel, numeral 6 denotes a nuclear fuel assembly, numeral 7 denotes an incore detector guide tube, and numeral 8 denotes a lower support structure.
As shown in FIG. 2, a conventional nuclear reactor power distribution synthesis technique in which signals of neutron detectors 10 provided inside or outside of a nuclear reactor are combined to produce continuous power distribution has been used. In this conventional technique, a coefficient of a synthesis function by which a predetermined basis function shown in Equation 1 is multiplied is determined using an output value calculated by design codes. That is, only the coefficient of the synthesis function is changed without varying the predetermined basis function, when power distribution is synthesized. A well-known function such as a Fourier series function, a cubic spline function, etc. is used as the predetermined basis function. Therefore, it is difficult to precisely synthesize continuous power distribution because the unique shape of the basis function affects the power distribution synthesis.

[Equation 1]

$$FZ(Z_i) = \sum_{j}^{n} A_j \times \mu_j(Zi)$$

(here, $FZ(Z_i)$ : a power distribution value at position $Z_i$, $A_j$ : a j-th coefficient of a synthesis function, $\mu_j(Z_i)$ : a basis function for synthesis, n: a coefficient of an detector)
An example of $\mu_j(Z_i)$:

$$\mu_j(Z_i) = \sum_{n=1}^{ND} (a_n \cos n\pi B_C(Z-0.5) + b_n \sin n\pi B_C(Z-0.5))$$

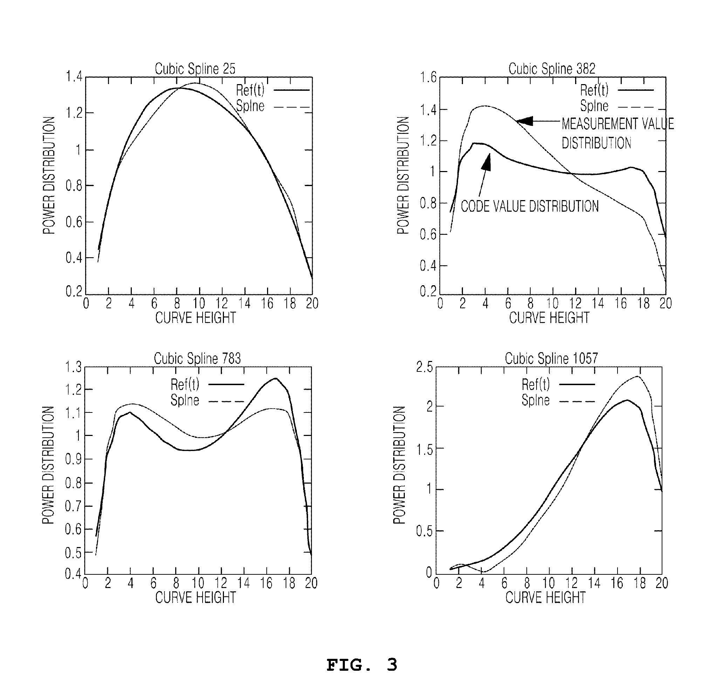

FIG. 3 illustrates a part of results of power distribution synthesis which is used in a reactor core protective system of an OPR1000 nuclear power plant. Particularly, FIG. 3 shows that there is a comparatively great difference between power distribution synthesized using measurement data and code value distribution. If such a measurement error occurs, uncertainty in measurement is increased whereby operation margin is reduced, power is reduced when the nuclear reactor is in a transient state, and an unexpected failure of the nuclear reactor may be caused.
Meanwhile, as a conventional related patent technique, a method of controlling axial power distribution in a nuclear reactor was proposed, including: a first step of producing a three-dimensional equilibrium state reference power distribution model including axial power distribution and radial power distribution when a reactor core is in an equilibrium state; a second step of applying an arbitrary value to the three-dimensional equilibrium state reference power distribution model to transform it into a three-dimensional virtual reference power distribution model which produces power distribution of various equilibrium states in response to operation conditions of the reactor core; a third step of contracting only axial power distribution of the three-dimensional virtual reference power distribution model into an one-dimensional phase, thus producing axial transient state power distribution; a fourth step of combining the axial transient state power distribution and radial power distribution of the three-dimensional equilibrium state reference power distribution model and obtaining a W(z) data set including penalties not only of the equilibrium state of the reactor core but also of various transient states which can be caused in the reactor core; and a fifth step of applying the a W(z) data set to operation of the reactor core (refer to Patent document 1).

[Prior art document]

[Patent document]

(Patent document 1) Korean Patent Registration No. 10-0912031

SUMMARY OF THE INVENTION

Accordingly, the present invention has been made noting the above problems occurring in the prior art, and an object of the present invention is to provide a method of synthesizing nuclear reactor power distribution using an optimized nonlinear basis function in such a way that rather than predetermining a basis function, a combination of basis functions which can derive optimal results in simulating nuclear reactor power distribution is determined by searching based on design data.

In order to accomplish the above object, the present invention provides a method of synthesizing nuclear reactor power distribution using an optimized nonlinear basis function by means of combining signals of neutron detectors provided inside or outside a nuclear reactor, the method including: a step of searching a combination of optimized nonlinear basis functions which minimize errors, without in advance determining shapes of said basis functions; and a step of determining a shape of a synthesis function using the combination of optimized nonlinear basis functions to synthesize the nuclear reactor power distribution.

Determining the shape of the synthesis function is performed by using the following equation;

$$FZ(Z_i) = a_0 + \sum_{i=1}^{n} a_i \phi_i + \sum_{i=1}^{n} \sum_{j=1}^{n} a_{ij} \phi_i \phi_j + \sum_{i=1}^{n} \sum_{j=1}^{n} \sum_{k=1}^{n} a_{ijk} \phi_i \phi_j \phi_k + ...$$

(here, $FZ(Z_i)$ : a power distribution value at position $Z_i$, $\Phi_i$, $\Phi_j$, $\Phi_k$ : signals of detectors at respective positions).

The synthesis function may use a variety of functions including $e^x$, $\sin x$, $x^n$, $x_i x_j$

According to the present invention, the operation margin of a nuclear reactor can be extended by enhancing the accuracy in synthesizing power distribution. And it is possible to increase the safety of the nuclear power plant and to obtain economical feasibility by reducing unexpected shutdown of the plant, power up-rating resulting, etc.

BRIEF DESCRIPTION OF THE DRAWINGS

The above and other objects, features and advantages of the present invention will be more clearly understood from the following detailed description taken in conjunction with the accompanying drawings, in which:

FIG. 1 shows the construction of a reactor core and an example of calculation of axial power distribution;
FIG. 2 shows a conventional detector, measurement values and synthesized power distribution;
FIG. 3 shows an example of occurrence of an error resulting from effects of a basis function;
FIG. 4 illustrates an example of a shape of an optimized synthesis function according to an detector signal; and
FIG. 5 is a view showing a comparative example between the results of a method using a cubic spline function and a method using a searched function.

DESCRIPTION OF THE PREFERRED EMBODIMENTS

Hereinafter, a preferred embodiment of the present invention will be described in detail with reference to the attached drawings. If in the specification, detailed descriptions of well-known functions or configurations would unnecessarily obfuscate the gist of the present invention, the detailed descriptions will be omitted. This invention may, however, be embodied in many different types, and should not be construed as limited to the embodiment set forth herein. Rather, all changes that fall within the bounds of the present invention, or the equivalence of the bounds are therefore intended to be embraced by the present invention.

A nuclear reactor power distribution synthesis method using an optimized nonlinear basis function according to the present invention proposes a general method of searching the optimized nonlinear basis function and synthesizing power distribution in a nuclear reactor using the nonlinear basis function. The basis function may differ from a shape of that of the following embodiment.

The embodiment of the present invention pertains to a GMDH (Group Method of Data Handling) methodology that was proposed by Ivakhnenko and, particularly, provides a self-organization method which derives an optimized model in a form of a polynomial equation from data. That is, unlike the conventional method using Fourier development or a cubic spline function, to obtain axial node distribution using signals of neutron detectors, if detector signals are respectively denoted as $\Phi_i$, $\Phi_j$ and $\Phi_k$, relationship among these is expressed as a polynomial equation of Kolmogrow-Gabor as shown in Equation 2. However, rather than being limited to the GMDH methodology, the gist of the present invention is that an optimized basic function combination is determined by searching without predetermining a shape of a basic function.

[Equation 2]

$$FZ(Z_i) = a_0 + \sum_{i=1}^{n} a_i \phi_i + \sum_{i=1}^{n}\sum_{j=1}^{n} a_{ij} \phi_i \phi_j + \sum_{i=1}^{n}\sum_{j=1}^{n}\sum_{k=1}^{n} a_{ijk} \phi_i \phi_j \phi_k + ...$$

(here, $FZ(Z_i)$ : a power distribution value at position $Z_i$, $\Phi_i$, $\Phi_j$, $\Phi_k$ : signals of detectors at respective positions)

Algorithm of determining the optimized basic function combination includes searching a combination of synthesis functions, which are not predetermined as Equation 2, in such a way that error occurrence is minimized, and then determining the shape of the final synthesis function. Here, a variety of functions, for example, $e^x$, $\sin x$, $x^n$, $x_i x_j$ ..., can be used as the synthesis functions. A method of combining these functions is determined depending on the result of optimization using a simulated annealing process, a genetic algorithm process, a GMDH (group method of data handling) process, etc.

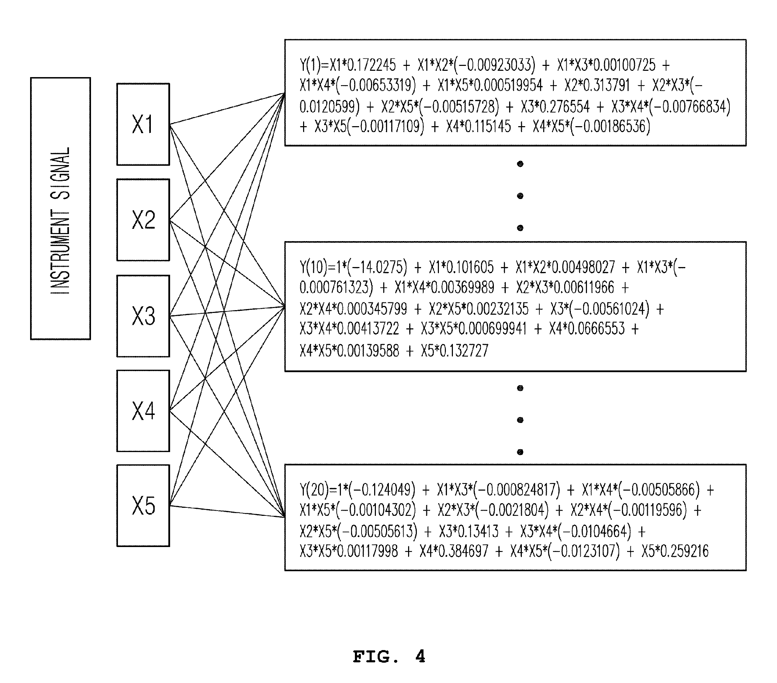

FIG. 4 illustrates a shape of an optimized synthesis function according to a detector signal and, more particularly, an example of a shape of an optimized nonlinear basis function obtained through a GMDH process.

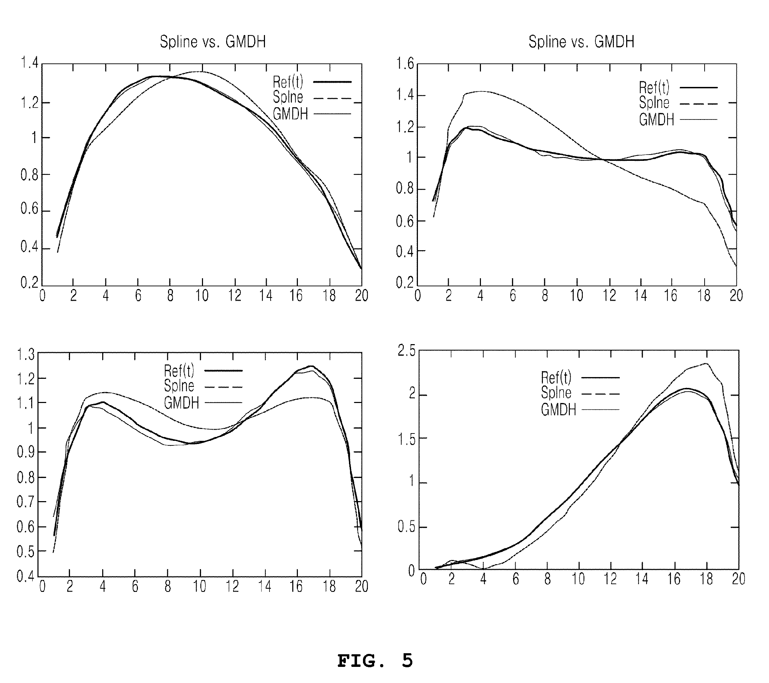

FIG. 5 is a view showing a comparative example between the results of a method using a cubic spline function and a method using a searched function. It can be understood that compared to the cubic spline function causing a relatively large error, the method using a searing process, shown in FIG. 4, can provide the results corresponding approximately to the references.

Using a 6-sigma technique, the result of equal variance comparison on an error is as Table 1.

[Table 1]

| Standard deviation 95% Bonferroni confidence interval | | | | |
|---|---|---|---|---|
| C6 | N(the number of sample) | Lower limit | Standard deviation | Upper limit |
| Cubic Spline | 1060 | 0.227140 | 0.238219 | 0.250391 |
| GMDH | 1060 | 0.039434 | 0.041358 | 0.043471 |

- F-test (normal distribution): test statics = 33.18, P-value = 0.000
- Levene test (continuous type): test statics = 371.85, P-value = 0.000
- P value = 0, adoption of alternative hypothesis (standard deviation differs before and after improvement), in other words, there is a difference in standard deviation before and after improvement (effectiveness verification)

For reference, to continuously promote exportation of nuclear power plants, it is very important to have differentiation in operation margin from designs of existing competing countries. Particularly, it is very significant that an additional operation margin is provided to enhance the power output in the same nuclear reactor with a constant capacity.

The present invention can enhance the precision of power distribution synthesis, thereby markedly increasing the operation margin. As a result, the safety of the nuclear power plant can be improved, a problem of unexpected failure of the plant can be markedly reduced, and power up-rating can be obtained whereby financial benefits can be achieved.

In detail, if the power of a 1,000-MWe nuclear power plant is increased by 10%, financial benefits of 23 billion won (about 23 million dollars) per power plant unit can be achieved according to the evaluation result in accomplishment of a project for enhancing the power of the nuclear power plant.

Although a nuclear reactor power distribution synthesis method according to the preferred embodiment of the present invention has been disclosed, those skilled in the art will appreciate that various modifications, additions and substitutions are possible, without departing from the scope and spirit of the invention as disclosed in the accompanying claims.

Therefore, the embodiment disclosed in this specification and the attached drawings are only for illustrative purposes rather than limiting the technical spirit of the present invention. The scope of the present invention must be defined by the accompanying claims, and all technical spirits that are in the equivalent range to the claims must be regarded as falling within the scope of the present invention.

**Claims**

1.  A method of synthesizing nuclear reactor power distribution by combining signals of neutron detectors (10) provided inside or outside a nuclear reactor, the method comprising:

    a step of searching a combination of optimized nonlinear basis functions which minimize errors, without in advance determining shapes of said basis functions; and
    a step of determining a shape of a synthesis function using the combination of optimized nonlinear basis functions to synthesize the nuclear reactor power distribution.

2.  The method as set forth in claim 1, wherein the step of determining the shape of the synthesis function is performed by using the following equation;

$$FZ(Z_i) = a_0 + \sum a_i \phi_i + \sum \sum a_{ij} \phi_i \phi_j + \sum \sum \sum a_{ijk} \phi_i \phi_j \phi_k + ...$$

    where $FZ(Z_i)$ is a power distribution value at position $Z_i$, and $\Phi_i$, $\Phi_j$, $\Phi_k$ are signals of the detectors at respective positions.

3.  The method as set forth in claim 2, wherein the synthesis function uses various types of functions including $e^x$, sin $x$, $x^n$, $x_i x_j$ etc.

CALCULATION
VALUE DISTRIBUTION

MEASUREMENT
VALUE DISTRIBUTION

FIG. 1

10

MEASUREMENT VALUE OF INSTRUMENT

SYNTHESIZED CONTINUOUS POWER DISTRIBUTION

FIG. 2

FIG. 3

EP 2 955 720 A1

INSTRUMENT SIGNAL

X1

X2

X3

X4

X5

Y(1)=X1*0.172245 + X1*X2*(−0.00923033) + X1*X3*0.00100725 + X1*X4*(−0.00653319) + X1*X5*0.000519954 + X2*0.313791 + X2*X3*(−0.0120599) + X2*X5*(−0.00515728) + X3*0.276554 + X3*X4*(−0.00766834) + X3*X5(−0.00117109) + X4*0.115145 + X4*X5*(−0.00186536)

Y(10)=1*(−14.0275) + X1*0.101605 + X1*X2*0.00498027 + X1*X3*(−0.000761323) + X1*X4*0.00369989 + X2*X3*0.00611966 + X2*X4*0.000345799 + X2*X5*0.00232135 + X3*(−0.00561024) + X3*X4*0.00413722 + X3*X5*0.000699941 + X4*0.0666553 + X4*X5*0.00139588 + X5*0.132727

Y(20)=1*(−0.124049) + X1*X3*(−0.000824817) + X1*X4*(−0.00505866) + X1*X5*(−0.00104302) + X2*X3*(−0.0021804) + X2*X4*(−0.00119596) + X2*X5*(−0.00505613) + X3*0.13413 + X3*X4*(−0.0104664) + X3*X5*0.00117998 + X4*0.384697 + X4*X5*(−0.0123107) + X5*0.259216

FIG. 4

FIG. 5

Europäisches
Patentamt

European
Patent Office

Office européen
des brevets

## EUROPEAN SEARCH REPORT

Application Number

EP 14 17 1984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YU SEON ET AL: "Predictive Mathematical Modeling for Excore Neutron Detectors Using A Neural Network", PHYSOR 2002, PROCEEDINGS INTERNATIONAL CONFERENCE ON PHYSICS OF REACTORS, SEOUL, KOREA, OCTOBER 7-10, 2002, 7 October 2002 (2002-10-07), page 7 pp., XP055151443, * the whole document * | 1-3 | INV. G21C17/108 G21D3/00 |
| A | GONCALVES I: "Monitoring an experimental reactor using the Group Method of Data Handling approach", NUCLEAR TECHNOLOGY, AMERICAN NUCLEAR SOCIETY, CHICAGO, IL, US, vol. 149, no. 1, January 2005 (2005-01), pages 101-109, XP009181121, ISSN: 0029-5450 * the whole document * | 1-3 | |
| A | A. G. IVAKHNENKO: "The Review of Problems Solvable by Algorithms of the Group Method of Data Handling (GMDH)", PATTERN RECOGNITION AND IMAGE ANALYSIS, vol. 5, no. 4, January 1995 (1995-01), pages 527-535, XP055151244, * abstract * * section 1 * | 2 | TECHNICAL FIELDS SEARCHED (IPC) G21C G21D |
| A | US 4 839 134 A (IMPINK JR ALBERT J [US] ET AL) 13 June 1989 (1989-06-13) * abstract; figures 1,7 * * column 5, line 9 - column 7, line 52 * | 1 | |

-/--

The present search report has been drawn up for all claims

| Place of search | Date of completion of the search | Examiner |
|---|---|---|
| Munich | 13 November 2014 | Manini, Adriano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 14 17 1984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Anonymous: "Group method of data handling - Wikipedia, the free encyclopedia", , 7 October 2014 (2014-10-07), XP055151530, Retrieved from the Internet: URL:http://en.wikipedia.org/wiki/Group_method_of_data_handling [retrieved on 2014-11-07] ----- | | |

TECHNICAL FIELDS
SEARCHED       (IPC)

The present search report has been drawn up for all claims

| Place of search | Date of completion of the search | Examiner |
|---|---|---|
| Munich | 13 November 2014 | Manini, Adriano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 14 17 1984

This annex lists the patent family members relating to the patent documents cited in  the above-mentioned European search report.
The members are as contained in the European Patent Office EDP file on
The European Patent Office is in no way liable for these particulars which are merely given for the purpose of information.

13-11-2014

| Patent document cited in search report | | Publication date | Patent family member(s) | | Publication date |
|---|---|---|---|---|---|
| US 4839134 | A | 13-06-1989 | EP | 0323280 A2 | 05-07-1989 |
| | | | JP | H026791 A | 10-01-1990 |
| | | | JP | 2628534 B2 | 09-07-1997 |
| | | | US | 4839134 A | 13-06-1989 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 100912031